Europäisches Patentamt

European Patent Office

Office européen des brevets

(19)

(11) Veröffentlichungsnummer: **0 110 446 B1**

# (12) EUROPÄISCHE PATENTSCHRIFT

(45) Veröffentlichungstag der Patentschrift: **20.02.91**

(51) Int. Cl.⁵: **H04N 11/16, H04N 9/455**

(21) Anmeldenummer: **83201526.7**

(22) Anmeldetag: **25.10.83**

(54) **Schaltungsanordnung zum Gewinnen einer phasenabhängigen Steuergrösse, insbesondere in einem Farbfernsehempfänger.**

(30) Priorität: **28.10.82 DE 3239933**

(43) Veröffentlichungstag der Anmeldung:
**13.06.84 Patentblatt 84/24**

(45) Bekanntmachung des Hinweises auf die
Patenterteilung:
**20.02.91 Patentblatt 91/08**

(84) Benannte Vertragsstaaten:
**DE FR GB IT**

(56) Entgegenhaltungen:
**EP-A- 0 037 317**
**US-A- 4 090 145**

(73) Patentinhaber: **Philips Patentverwaltung GmbH**
**Wendenstrasse 35 Postfach 10 51 49**
**D-2000 Hamburg 1(DE)DE**

Patentinhaber: **N.V. Philips' Gloeilampenfabrieken**
**Groenewoudseweg 1**
**NL-5621 BA Eindhoven(NL)FR GB IT**

(72) Erfinder: **Brand, Gerd, Dr.**
**Pappelweg 3b**
**D-3304 Didderse(DE)**
Erfinder: **Möring, Wilhelm**
**Inselwall 10**
**D-3300 Braunschweig(DE)**

(74) Vertreter: **Hartmann, Heinrich, Dipl.-Ing. et al**
**Philips Patentverwaltung GmbH Wendenstrasse 35 Postfach 10 51 49**
**D-2000 Hamburg 1(DE)**

## Beschreibung

Die Erfindung bezieht sich auf eine Schaltungsanordnung zum Gewinnen einer phasenabhängigen Steuergröße, die abhängig ist von der Phasenverschiebung eines einen Amplitudenfaktor aufweisenden Farbsynchronsignals gegenüber einem Bezugssignal, vorzugsweise etwa gleicher Frequenz, das phasenstarr gekoppelt ist mit einem Taktsignal, mit dem die Amplitudenwerte des Farbsynchronsignals abgetastet werden und dessen Frequenz das 4n-fache der Frequenz des Bezugssignals beträgt,

wobei n eine ganze Zahl der Reihe 1, 2, ... ist und die Tastung derart erfolgt, daß eine erste durch die Abtastung erhaltene Signalprobe (X, z.B. A . (sin $\alpha$ + cos $\alpha$ )) und eine zweite um eine Viertelperiode des Farbsynchronsignals verschobene Signalprobe (Y, z.B. A . (cos $\alpha$ - sin $\alpha$)) erhalten werden,

die der Amplitude (A) des Farbsynchronsignals proportional sind und die von dem Phasenwinkel ($\alpha$) des Farbsynchronsignals gegenüber einem durch das Bezugssignal bestimmten Zeitpunkt gemäß einer Winkelfunktion abhängen,

wobei die Signalproben (X und Y) quadriert und aus ihrer Summe die Wurzel gezogen wird derart, daß der Amplitudenfaktor erhalten wird

und wobei weiter mittels wenigstens einer Umformungsstufe, deren Eingang die erste und die zweite Signalprobe zugeführt werden, wenigstens eine vom Phasenwinkel ($\alpha$) abhängige, vom Amplitudenfaktor wenigstens nahezu unabhängige phasenabhängige Steuergröße erhalten wird.

Eine derartige Schaltungsanordnung ist bekannt aus der EP-A1- 00 37 317. Dort werden aus dem Farbartsignal und dem Farbsynchronsignal durch Abtastung Signalproben erhalten, die A . sin $\alpha$ und A . cos $\alpha$ entsprechen. Aus diesen soll der Winkel $\alpha$ amplitudenunabhängig gewonnen werden, indem durch den Quotienten beider Werte der Tangens gebildet und dann der Winkel (Arcustangens) abgeleitet werden. Während des Farbsynchronsignals wird so ein etwaiger Fehlerwinkel bestimmt und durch Addition bzw. Subtraktion zum Winkel des Farbvektors dort eliminiert. Schließlich wird der getrennt von dieser Winkelbestimmung gewonnene Betrag des Farbvektors mit dem sin bzw. cos des korrigierten Farb-Winkels multipliziert, und so werden die unverfälschten Komponenten des Farbartsignals erhalten.

Der über den Tangens erhaltene Winkel ist aber um 180° unsicher, da der Tangens im ersten und zweiten bzw. im dritten und vierten Quadranten nach Betrag und Steilheit gleich ist. Außerdem geht der Tangens bis Unendlich, so daß ein sehr großer Werteumfang zu berechnen und zu verarbeiten ist.

Der Erfindung liegt die Aufgabe zugrunde, in einer Schaltungsanordnung der eingangs erwähnten Art den Aufwand zu vermindern und auf möglichst direktem Wege den Phasenfehler unabhängig vom Amplitudenfaktor zu bestimmen und auszuwerten.

Diese Aufgabe wird nach der Erfindung dadurch gelöst, daß der Umformerstufe (55, 70, 90) sin- un/oder cos-Glieder enthaltende Signalproben (X, Y) zugeführt werden, aus denen der Amplitudenfaktor (A) gebildet wird, und daß mindestens eine Signalprobe (X, Y) durch den gewonnenen Amplitudenfaktor (A) dividiert wird.

Die erhaltene phasenabhängige Steuergröße kann dem das Taktsignal bedingenden Oszillator zur Frequenz- und/oder

Phasenregelung zugeführt werden, wobei die Regelung z.B. auf den Sollwert $\alpha$ = 0° bzw. $\alpha$ = 45° bewirkt werden kann.

Insbesondere kann die Umformung so erfolgen. daß sie wenigstens annähernd der Funktion

$$X \;/\; \sqrt{(X^2 + Y^2)}$$

bzw.

$$Y \;/\; \sqrt{(X^2 + Y^2)}$$

entspricht, so daß eine Steuergröße erhalten wird, die zu (sind $\alpha$ + cos $\alpha$ ) proportional ist. Dadurch kann insbesondere eine Regelung auf $\alpha$ = 45° erzielt werden, wenn man die Steuergröße als Stellgröße dem Oszillator zuführt.

Nach einer anderen Ausführungsform erfolgt die Umformung so, daß sie wenigstens annähernd der Funktion

$$(X \pm Y) \;/\; \sqrt{(X^2 + Y^2)}$$

entspricht, so daß eine Steuergröße erhalen wird, die zu cos $\alpha$ bzw. sin $\alpha$ proportional ist. Dadurch ist insbesondere eine Regelung auf $\alpha = 0°$ oder $\alpha = 90°$ möglich. Weiter läßt sich mit diesen Größen, die im Farbsynchronintervall erhalten sind, das Farbartsignal der folgenden Zeile von Punkt zu Punkt durch Umrechnung korrigieren.

Nach einer weiteren Ausführungsform kann die Umformung derart erfolgen, daß sie wenigstens annähernd der Funktion

$$\frac{(X - Y) \cos \alpha_o - (X + Y) \sin \alpha_o}{(X^2 . Y^2)}$$

$$bzw. \quad \frac{(X - Y) \sin \alpha_o + (X - Y) \cos \alpha_o}{X^2 + Y^2}$$

entspricht, so daß eine Stellgröße erhalten wird, die zu sin $\alpha - \alpha_o$) bzw. cos $(\alpha - \alpha_o)$ proportional ist. Dadurch kann eine bestimmte Verdrehung des Farbvektors um den Winkel $\alpha_o$ vorgenommen werden, wodurch sich der Farbton ändern läßt. Der Korrekturwert muß bei PAL-Signalen im Vorzeichen von Zeile zu Zeile umgeschaltet werden, was jedoch keine Schwierigkeiten bringt, da ein PAL-Schaltsignal ohnehin vorhanden ist.

Zur Glättung kann die Phasensteuergröße über ein proportional und/oder integrierend übertragendes Filterglied geführt werden. So läßt sich ein Proportional- und gegebenenfalls Integral-Regler realisieren.

Nach einer Ausführungsform der Erfindung werden zum Korrigieren der Phase eines Farbartsignals mit einer gegenüber dem Farbsynchronsignal gleichen Frequenz eine Phasen-Steuergröße und das Farbartsignal einer Multiplizierstufe zugeführt, deren Ausgangssignal das in der Phase korrigierte und gegebenenfalls phasenrichtig demodulierte Farbartsignal liefert. Zweckmäßig kann dieses Ausgangssignal additiv oder subtraktiv mit dem Ausgangssignal einer weiteren mit einem anderen Phasensteuersignal, gegebenenfalls über eine Verzögerungsstufe, angesteuerten Multiplizierstufe kombiniert werden.

Nach einer anderen Ausführungsform der Erfindung wird aus dem ersten und dem zweiten Abtastsignal eine erste, (sind $\alpha$ + cos $\alpha$ ) entsprechende und eine zweite, (cos $\alpha$ - sin $\alpha$ ) entsprechende Phasen-Steuergröße gebildet und vorzugsweise über je ein höherfrequente Signale zurückhaltendes Filter einer ersten bzw. einer zweiten Mischstufe zugeleitet, deren anderem Eingang das Farbartsignal direkt bzw. um eine Taktperiode verzögert zugeführt wird und deren Ausgangssignale in einer Additionsstufe kombiniert werden, derart, daß am Ausgang der Additionsstufe das Farbartsignal praktisch ohne Phasenfehler auftritt.

Nach einer weiteren Ausführungsform der Erfindung werden aus dem ersten und dem zweiten Abtastsignal eine erste, sin entsprechende und eine zweite, cos $\alpha$ entsprechende Phasensteuergröße gebildet und, vorzugsweise über je ein höherfrequente Signale zurückhaltendes Filter, über eine Zuordnungsstufe abwechselnd und gegebenenfalls mit wechselndem Vorzeichen einer dritten und einer vierten Mischstufe zugeführt, deren anderen Eingängen das Farbartsignal zugeführt wird, wobei die Zuordnung derart ist, daß an den Ausgängen der Multiplizierstufen die auf dem Farbartsignal in Orthogonalmodulation enthaltenen Signale demoduliert auftreten.

Dadurch werden die einzelnen Abtastwerte dem einen bzw. dem anderen Modulationssignal zugeordnet und demoduliert. Allenfalls der bei einem PAL-Signal im roten Farbdifferenzsignal auftretende Vorzeichenwechsel muß gegebenenfalls anschließend noch korrigiert werden, jedoch kann die Korrektur auch gleichzeitig bei der Demodulation geschehen.

Bei dieser Ausführungsform werden zweckmäßig die Ausgangssignale der Multiplizierstufe über je ein höherfrequente Signale unterdrückendes Filter geführt. Diese Filterung kann vorzugsweise dadurch erzielt werden, daß das Ausgangssignal einer Multiplizierstufe einer Additionsstufe einerseits direkt und andererseits über eine um ein, einer Viertelperiode des zweiten Wechselstromsignals entsprechendes Intervall verzögernde Stufe zugeführt wird, so daß am Ausgang der Additionsstufe das gefilterte demodulierte Signal auftritt.

Die Erfindung wird nachstehend anhand der Zeichnung beispielsweise näher erläutert, in der

Fig. 1    mit den Farbartschwingungen eines Fernsehsignals zusammenhängende und für die Tastung benutzte Schwingungszüge zeigt, und in

Fig. 2    in Blockschaltbildart ein Farbsynchronsignal-Abtaster dargestellt ist, wie er in den Schaltungen nach den Fig. 3 und 5 Anwendung finden kann,

Fig. 3    zeigt eine Ausführungsform der Erfindung mit Phasenregelung des Taktoszillators und gegebenenfalls Amplitudeneinstellung des Farbartsignals,

Fig. 4    eine Ausführungsform mit Phasenschiebung des Farbartsignals,

Fig. 5    eine Ausführungsform, bei der im Demodulator das Referenzsignal zur Kompensation der Phasenabweichung korrigiert wird.

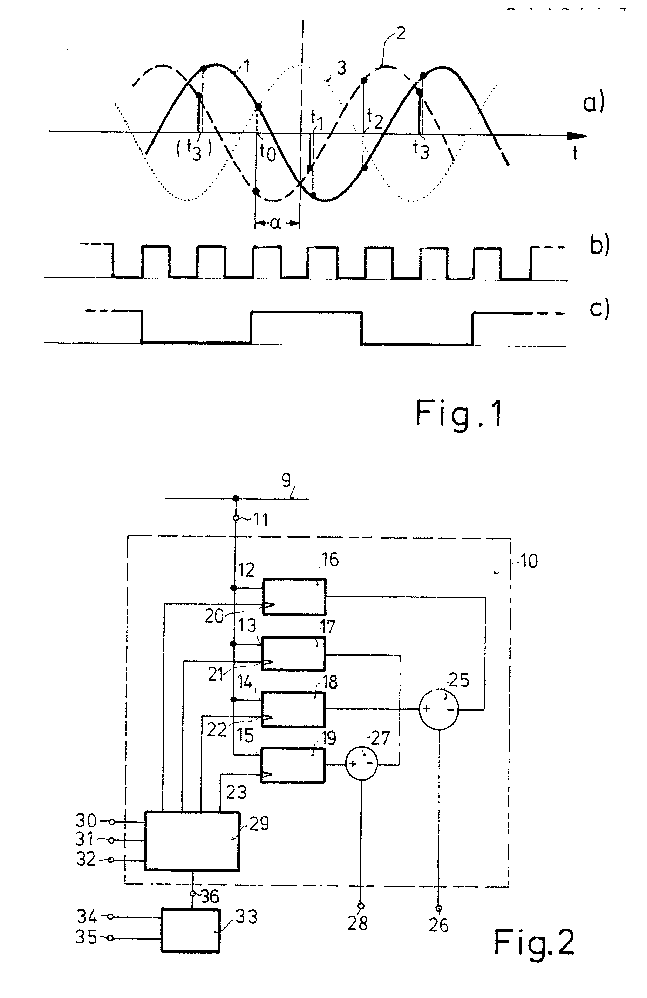

In Fig. 1a ist ein sinusförmiges Wechselstromsignal 1 über der Zeit t dargestellt, das dem in einem PAL-Farbfernsehsignal enthaltenen Farbsynchronsignal der Farbträgerfrequenz $F_o$ in der einen Phasenlage entspricht. Dieses Farbsynchronsignal tritt bekanntlich auf der hinteren Schwarzschulter während eines kurzen Zeitintervalls, das z.B. zehn sinusför mige Shwingungszüge umfaßt, auf. In Kurve 2 ist gestrichelt das Farbsynchronsignal in der anderen Phasenlage dargestellt. Bekanntlich wechselt die Phasenlage entsprechend den Kurvenzügen 1 und 2 von Zeile zu Zeile und hat dabei gegenüber einem Referenzsignal U, das insbesondere dem positiven blauen Farbdifferenzsignal + (B-Y), das in Fig. 1a als Kurve 3 punktiert eingezechnet ist, entspricht, eine Phasenverschiebung von + 135° bzw. - 135°.

Die in Fig. 1a dargestellten Farbsynchronsignale 1 bzw. 2 werden zu den angegebenen Zeitpunkten $t_0$, $t_1$ `$t_2$, $t_3$ usw. abgetastet. Diese Abtastung wird gesteuert durch eine symmetrische Rechteckschwingung gemäß Fig. 1b, deren Frequenz dem Vierfachen der Frequenz einer rechteckförmigen Referenzschwingung gemäß Fig. 1c entspricht. Die Referenzschwingung 1c hat etwa die gleiche Frequenz (F) wie die Farbträgerschwingungen nach Fig. 1a. Dabei entspricht der Bezugszeitpunkt $t_0$ der ansteigenden Flanke der Referenzschwingung gemaß Fig. 1c, die gleichzeitig einer ansteigenden Flanke des Taktsignals nach Fig. 1b entspricht. Zwischen beiden Schwingungen tritt jedoch eine Phasenverschiebung $\alpha$ auf, die definiert ist als Differenz zwischen dem Zeitpunkt $t_0$ und dem Zeitpunkt, an dem das Referenzsignal U bzw. das positive Farbdifferenzsignal (B-Y) seinen Maximalwert aufweist. Die Phasenbeziehung zwischen den Kurven 1, 2 und 3 der Fig. 1a und zwischen den Kurven nach den Fig. 1b und 1c ist fest gegeben.

Die Schwingung nach der Kurve 1 entspricht der Formel

$$b = \cos\left(2\tilde{\pi} F t + \frac{3\tilde{\pi}}{4}\right) \qquad (1)$$

Entsprechend erhält man für die Kurve 2 die Formel

$$b' = \cos\left(2\tilde{\pi} F t - 3\tilde{\pi}/4\right) \qquad (2)$$

Für die Zeit t sind die Tastzeitpunkte $t_n$ einzusetzen:

$$t = n.T - \alpha/2\tilde{\pi} F, \qquad (3)$$

wobei F die Farbträgerfrequenz und T die Taktperiode ist, die T = 1/4F beträgt.
Man erhält dann

$$b, b' = \cos\left(n .\tilde{\pi}/2 + \tilde{\pi} \pm \tilde{\pi}/4 - \alpha\right) \qquad (4)$$

Für die Zeitpunkte $t_0$, $t_1$ usw. ergeben sich dann die nachstehenden Zusammenhänge:

## Tabelle 1

$$t_0 : n=0 \qquad b_0 = \cos(3\tilde{\pi}/4 - \alpha) = 1/\sqrt{2}(\sin\alpha - \cos\alpha)$$

$$t_1 : n=1 \qquad b_1 = \cos(5\tilde{\pi}/4 - \alpha) = 1/\sqrt{2}(-\sin\alpha - \cos\alpha)$$

$$t_2 : n=2 \qquad b_2 = \cos(7\tilde{\pi}/4 - \alpha) = 1/\sqrt{2}(-\sin\alpha + \cos\alpha)$$

$$t_3 : n=3 \qquad b_3 = \cos(\tilde{\pi}/4 - \alpha) = 1/\sqrt{2}(\sin\alpha + \cos\alpha)$$

$$t_0 : n=0 \qquad b'_0 = \cos(5\tilde{\pi}/4 - \alpha) = 1/\sqrt{2}(-\sin\alpha - \cos\alpha)$$

$$t_1 : n=1 \qquad b'_1 = \cos(7\tilde{\pi}/4 - \alpha) = 1/\sqrt{2}(-\sin\alpha + \cos\alpha)$$

$$t_2 : n=2 \qquad b'_2 = \cos(\tilde{\pi}/4 - \alpha) = 1/\sqrt{2}(+\sin\alpha + \cos\alpha)$$

$$t_3 : n=3 \qquad b'_3 = \cos(3\tilde{\pi}/4 - \alpha) = 1/\sqrt{2}(+\sin\alpha - \cos\alpha)$$

Dabei werden die ersten vier Werte bei der Kurve 1 in Fig. 1a und die zweiten vier Werte im folgenden Zeilenintervall bei der Kurve 2 erhalten.

Es lassen sich folgende Zusammenhänge erkennen:

$$b_n = -b_{n+2}; \qquad b'_n = b'_{n+2}; \qquad b_n = b'_{n-1} \qquad (5)$$

Es sind also in jedem der beiden Blöcke der erste bzw. zweite und der übernächste Abtastwert bis auf das Vorzeichen gleich, und zwischen dem ersten und dem zweiten Block besteht eine Verschiebung der Abtastwerte um eine Taktperiode.

Es ist bei geeigneter Zuordnung möglich, aus jedem der beiden Farbsynchronsignale zwei Größen zu erhalten, die unterschiedlich, aber in definierter Weise von der Phasenverschiebung $\alpha$ abhängen. Dabei wird im allgemeinen Fall noch ein Amplitudenfaktor A zu berücksichtigen sein, der in den Formeln der Tabelle noch einzufügen wäre.

Es ergeben sich zwei unterschiedliche Werte

$$X = A/\sqrt{2} \cdot (+\sin\alpha + \cos\alpha) \qquad (6)$$

und

$$Y = A/\sqrt{2} \cdot (-\sin\alpha + \cos\alpha) \qquad (7)$$

die das eine oder das andere Vorzeichen aufweisen können.

In der Praxis können diese Werte gewonnen werden mit einem Farbsynchronsignal-Abtaster 10 nach Fig. 2.

In diesem Abtaster 10 wird das digitale Farbartsignal von einer Leitung 9 über eine Klemme 11 den ersten Eingängen 12, 13, 14 bzw. 15 von vier Registerstufen 16, 17, 18 bzw. 19 zugeführt. Den zweiten Eingängen 20, 21, 22 und 23 dieser Registerstufen werden zu den Zeitpunkten $t_0$, $t_1$, $t_2$ usw. (vgl. Fig. 1a) Tastsignale zugeführt. Der zum betreffenden Zeitpunkt anliegende Amplitudenwert des Farbsynchronsignals wird in ein digitales Signal übergeführt und gespeichert. Dabei ist die Steuerung derart, daß in den Stufen 16, 17, 18 und 19 in einem Intervall die Werte $b_0$, $b_1$, $b_2$ bzw. $b_3$ und im anderen Intervall die Werte $b'_1$ $b'_2$, $b'_3$ bzw. $b'_0$ auftreten. Dabei wird der Wert von der Stufe 16 in der Subtrahierstufe 25 von dem Wert der Stufe 18 abgezogen, so daß an der mit dem Ausgang der Stufe 25 verbundenen Klemme 26 das Signal nach Formel 7 auftritt. Entsprechend wird das Ausgangssignal der Stufe 17 in einer Stufe 27 subtrahiert vom Ausgangssignal der Stufe 19, so daß an der mit dem Ausgang der Stufe 27 verbundenen Ausgangsklemme 28 das Signal gemäß Formel (6) auftritt.

Die erforderlichen Tastsignale werden an die Eingänge 20, 21, 22, 23 von den zugeordneten Ausgängen einer Ansteuerstufe 29 geliefert, deren erster Eingangsklemme 30 das Taktsignal nach Fig. 1b, deren zweiter Eingangsklemme 31 das Referenzsignal nach Fig. 1c und deren drittem Eingang 32 ein PAL-Schaltsignal zugeführt wird, das von Zeile zu Zeile, also mit halber Zeilenfrequenz, einen anderen Wert annimmt und so die Steuerung gemäß dem oberen bzw. dem unteren Teil der Tabelle 1 vornimmt. Bei Empfang eines NTSC-Signals ist eine solche Umsteuerung nicht erforderlich.

Weiter werden einer Schaltstufe 33 von einer Eingangsklemme 34 die horizontalen und von einer Eingangsklemme 35 die vertikalen Synchronimpulse zugeführt. In der Schaltstufe 33 wird daraus ein Schaltsignal gebildet, das immer dann auftritt, wenn das Farbsynchronsignal oder wenigstens eine Schwingung davon in dem an der Klemme 11 anliegenden Farbartsignal vorhanden ist. Dieses Schaltsignal wird vom Ausgang der Stufe 33 über die Klemme 36 einem Eingang der Steuerstufe 29 zugeführt.

Die an den Ausgängen 26 und 28 auftretenden Signale nach den Formeln (6) und (7) sind mittels der Subtrahierstufen 25 und 27 gemäß Formel (5) aus zwei Signalteilen gleicher Art kombiniert. Dadurch kann erreicht werden, daß eventuelle additive Gleichwert-Anteile in jedem der Signale sich kompensieren und an den Ausgängen 26 und 28 nicht auftreten.

Da die Werte nach den Formeln (6) und (7) bei jeder einzelnen Schwingung des Farbsynchronsignals auftreten, genügt es, für die Auswertung nur einen Umlauf nach Kurve 1 bzw. 2 heranzuziehen. Die dafür erforderliche Steuerung kann von der Ansteuerstufe 29 bzw. 33 vorgenommen werden.

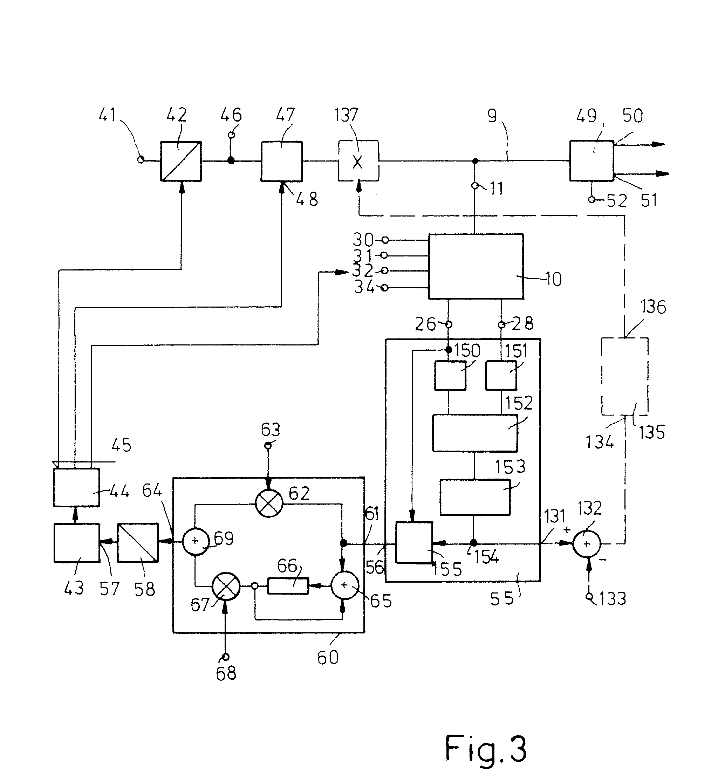

In der Ausführungsform nach Fig. 3 wird das analoge FBAS-Signal von einer Klemme 41 einem Analog-Digital-Wandler 42 zugeführt. Diesem wird auch ein Taktsignal zugeführt von einem Generator, der aus einem steuerbaren Oszillator 43 mit nachgeschalteter Impulsformungsstufe 44 besteht, die an ihrem Ausgang 45 das Taktsignal für den Wandler 42 liefert.

Das am Ausgang des Wandlers 42 erhaltene digitale Farbfernsehsignal wird einerseits einer Klemme 46 für die Helligkeitssignal-Verarbeitung und andererseits einem Bandpaß 47 zugeführt, der an seinem Ausgang das abgefilterte digitale Farbartsignal liefert. Der Bandpaß 47 arbeitet ebenfalls digital und erhält an seinem zweiten Eingang 48 ein Taktsignal vom Impulsformer 44. Das digitale Farbfernsehsignal wird dann einem an sich bekannten digitalen Demodulator 49 zugeführt, der an seinen beiden Ausgängen 50 und 51 die digitalen demodulierten Farbdifferenzsignale liefert, wenn wenigstens einem weiteren Eingang 52 geeignete Schaltsignale zugeführt werden.

Die Leitung 9 zwischen dem Filter 47 und dem Demodulator 49 (die Stufe 137 bleibt zunächst außer Betracht) ist mit einer Klemme 11 verbunden, an die ein Farbsynchronsignal-Abtaster 10 gemäß Fig. 2 angeschlossen ist, dem an den Klemmen 30, 31, 32 und 34 die dort erwähnten Signale zugeführt werden. Dabei treten an den Klemmen 26 und 28 die Signale nach den Formeln (6) und (7) auf. Diese Signale werden einer Umformungsstufe 55 zugeführt, in der sie nach der Erfindung weiterbehandelt werden. Das Signal X von der Klemme 26 und das Signal Y von der Klemme 28 werden je einer Quadrierstufe 150 bzw. 151 zugeführt, und die so erhaltenen Signale $X^2$ und $Y^2$ werden in einer Stufe 152 addiert. Aus dieser Summe wird in der Stufe 153 die Wurzel gezogen und gegebenenfalls mit einem konstanten Faktor versehen. Der so erhaltene Amplitudenfaktor-Wert wird über eine Leitung 154 einer Dividierstufe 155 zugeführt, an deren Ausgang dann der Abtastwert X, dividiert durch den Amplitudenfaktor A, auftritt und ein Regelsignal erhalten wird gemäß der Funktion

$$\frac{X}{\sqrt{\frac{1}{2}(X^2 + Y^2)}} = (\sin\alpha + \cos\alpha) \qquad (8)$$

Am Ausgang 56 der Umformerstufe 55 tritt somit ein Signal auf, das von einem Amplitudenfaktor A des Farbsynchronsignals unabhängig ist und nur die Winkelabhängigkeit gemäß Formel (8) aufweist.

Dieses Phasen-Steuersignal kann dem Regeleingang 57 des Oszillators 43 zugeführt werden, wobei die Regelung dann so erfolgt, daß der Ausdruck nach Formel (8) zu 0, der Winkel $\alpha$ also 45° wird.

Wenn der Oszillator 43 analog ausgebildet ist - was natürlich nicht notwendig ist -, muß das digitale Regelsignal vom Ausgang 56 noch geglättet und in ein analoges Regelsignal umgewandelt werden, bevor es dem Oszillator 43 zugeführt wird. Dazu ist in der Regelleitung zwischen dem Ausgang 56 und dem Eingang 57 ein Digital-Analog-Wandler 58 erforderlich. Die Glättung kann zwischen dem Wandler 58 und dem Oszillator 43 vorgenommen werden. Ein proportional-integrales Verhalten der Regelung läßt sich auch in einem digitalen PI-Regler (60) bewerkstelligen, der zwischen dem Ausgang 56 und dem Digital-Analog-Wandler 58 eingeschaltet ist. Das Regelsignal wird dabei vom Eingang 61 im Regler 60 einerseits einer ersten Multiplizierstufe 62 zugeführt, in der es mit einem vom Eingang 63 zugeführten Faktor multipliziert wird, der das Proportionalverhalten bestimmt. Der Ausgang der ersten Multiplizierstufe 62 ist mit dem Ausgang 64 der Stufe 60 verbunden.

Andererseits wird das Regelsignal vom Eingang 61 einer Addierstufe 65 zugeführt, deren Ausgangssi-

EP 0 110 446 B1

gnal einer das Signal um ein Taktintervall verzögernden Stufe 66 zugeführt wird. Der Ausgang der Stufe 66 ist mit einem zweiten Eingang der Addierstufe 65 verbunden, so daß die Stufen 65 und 66 eine Stufe zur laufenden Summierung (Akkumulator) bilden. Das so erhaltene, gewissermaßen integrierte Signal wird über eine Multiplizierstufe 67 dem ersten Eingang eines weiteren Addierers 69 zugeführt, dessen Ausgang 64 mit dem Digital-Analog-Wandler 58 verbunden ist. Dieses Signal steuert somit am Ausgang 64 einen integrierenden Regelanteil bei. Weiterhin wird das Regelsignal vom Eingang 61 über eine weitere Multiplizierstufe 62 unmittelbar dem zweiten Eingang des Addierers 69 zugeführt und bildet einen Proportionalregelanteil am Ausgang 64. Zur rinstellung einer gewünschten Regelverzögerung werden den Multiplizierstufen 62, 67 über die Eingänge 63 bzw. 68 Stellgrößen mit der Wirkung multiplikativer Koeffizienten zugeführt, deren Größe wählbar ist.

In der Schaltung nach Fig. 3 wird somit der Takt gegenüber dem Farbsynchronsignal so nachgeregelt, daß die Abtastung durch den der vierfachen Farbträgerfrequenz entsprechenden Takt bei 45°, 135°, 225° und 315° erfolgt.

Mit der bisher beschriebenen Schaltung nach Fig. 3 ist gemäß den gestrichelt angedeuteten Verbindungen und Stufen auch eine Amplitudenregelung bzw. Amplitudenstellung möglich. Dazu ist die Leitung 154, die das dem Amplitudenfaktor A entsprechende Signal führt, mit einem Ausgang 131 versehen, der somit ein Ausgangssignal gemäß der Formel

$$\sqrt{X^2 + Y^2} = A$$

führt, die der Amplitude des abgetasteten Farbsynchronsignals entspricht, und zwar unabhängig vom Phasenwinkel $\alpha$. Dieses Signal wird dem ersten Eingang einer Additionsstufe 132 zugeführt, an deren zweitem Eingang 133 ein vorgegebener Sollwert angelegt ist. In der Additionsstufe 132 wird der Sollwert am zweiten Eingang 133 von dem vom Ausgang 131 der Umformungsstufe 55 gelieferten Signal subtrahiert. Die Differenz stellt ein Fehlersignal dar, das dem Eingang 134 einer Regelsignal-Erzeugungsstufe 135 zugeleitet wird. Die Stufe 135 hat beispielsweise einen ähnlichen oder den gleichen Aufbau wie der Regler 60, d.h. sie stellt ein proportional und/oder integrierend übertragenes Filterglied dar, durch das das dem Eingang 134 zugeführte Fehlersignal geglättet wird. Das geglättete Signal erscheint am Ausgang 136 der Stufe 135 und wird einem Amplitudenstellglied 137 zugeführt, in welchem die Amplitude des der Leitung 9 und der Klemme 11 zugeführten Signals auf den vorgegebenen Sollwert eingestellt wird. Das Amplitudenstellglied kann in bekannter Weise aus Shiftstufen und einem Multiplizierer zusammengesetzt sein.

In der dargestellten Form ist die Stufe 137 in den Regelkreis mit eingefügt. Sie kann auch als reine Vorwärtsregelstufe (Stell-Stufe) arbeiten, wenn sie in die Leitung 9 hinter dem Abzweig zur Klemme 11 und vor der Stufe 49 eingeschaltet wird.

Mit der Schaltungsanordnung nach Fig. 3 in der durch die gestrichelten Schaltungsteile ergänzten Form ist es somit möglich, mit Hilfe der beiden an den Ausgängen 26 und 28 des Abtasters 10 auftretenden Signale X und Y unabhängig voneinander, d.h. voneinander entkoppelt, sowohl eine Phasen- als auch eine Amplitudenregelung vorzunehmen.

Der beschriebene Regelkreis zur Regelung der Amplitude A wird auch als Chromaautomatik bezeichnet.

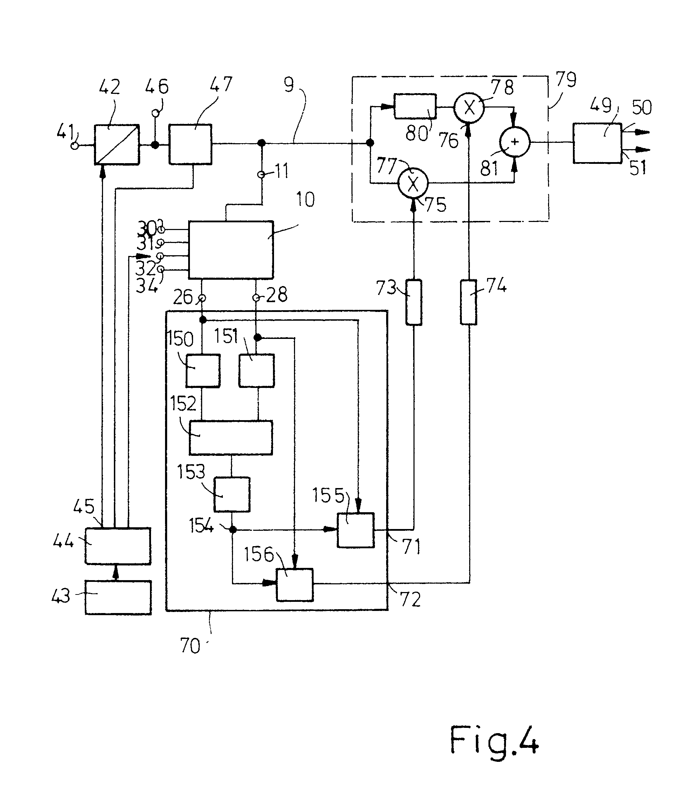

In Fig. 4 ist eine Schaltungsanordnung nach der Erfindung dargestellt, bei der das Farbartsignal derart umgeformt wird, daß es Werte ohne Phasenverschiebung aufweist. Dabei wird das analoge FBAS-Farbvideosignal, wie in Fig. 3, von einer Klemme 41 über einen D/A-Wandler 42 und ein digitales Bandfilter 47 einer mit der Klemme 11 verbundenen Leitung 9 zugeführt. Der Oszillator 43, der über eine Umformerstufe 44 die Taktsignale liefert, ist nicht vom digitalen Farbartsignal geregelt und läuft frei. Die im Farbsynchronsignal-Abtaster 10 erhaltenen Abtastwerte nach den Formeln (6) und (7) treten an den Klemmen 26 und 28 auf und werden einer zweiten Umformerstufe 70 zugeführt. In dieser Stufe ist ein weiterer Umformungsteil enthalten, der entsprechend folgender Formel arbeitet:

$$\sqrt{\frac{1}{2}(X^2 + Y^2)} = -\sin\alpha + \cos\alpha \quad (9)$$

Dazu werden die Werte X und Y von den Klemmen 26 und 28, wie in Fig. 3, zunächst Quadrierstufen 150 und 151 zugeführt und dann in der Stufe 152 summiert, so daß an deren Ausgang der quadrierte

7

Amplitudenfaktor $A^2$ auftritt. In der nachgeschalteten Stufe 153 wird daraus die Wurzel gezogen und gegebenenfalls ein konstanter Faktor hinzugefügt. Dieser erhaltene Wert, der somit dem Amplitudenfaktor A proportional ist, wird dann von der Ausgangsleitung 154 der Stufe 153 einerseits einer Divisionsstufe 155 zugeführt, der auch dann das Signal von der Klemme 26 zugeführt wird derart, daß am Ausgang dieser Stufe 155 und somit auch am Ausgang 71 der Umformungsstufe 70 ein Signal gemäß Formel 8 auftritt. Einer zweiten Divisionsstufe 156 wird einerseits der Amplitudenfaktor-Wert von der Leitung 154 und andererseits der Y-Wert von der Klemme 28 zugeführt derart, daß an ihrem Ausgang und somit auch am Ausgang 72 der Umformungsstufe 70 ein Signal gemäß Formel 9 auftritt. Diese Signale von den Ausgängen 71 und 72 werden über je ein Filter 73 bzw. 74 geglättet und den ersten Eingängen 75 und 76 von Multiplikationsstufen 77 und 78 zugeführt, die in einer Phasenkorrekturstufe 79 enthalten sind. Den zweiten Eingängen der Multiplizierstufe 77 und 78 wird das digitale Farbartsignal, das an der Klemme 11 auftritt, einerseits direkt und andererseits über eine um einen Takt verzögernde Stufe 80 zugeführt. Die Ausgangssignale der Stufen 77 und 78 werden in einer Additionsstufe 81 kombiniert und können dann, wie in Fig. 3, einem an sich bekannten Demodulator 49 zugeführt werden.

Alle digitalen Stufen erhalten vom Impulsformer 44 Taktsignale, was der Übersichtlichkeit halber nicht in jedem Falle dargestellt ist.

Mit den Stufen 10 und 70 wird im Bereich des Farbsynchronsignals der Winkel $\alpha$, der gegebenenfalls Abweichungen vom Sollwert enthält, festgestellt und über die Dauer der folgenden Bildzeile gespeichert, z.B. am Ausgang der Filter 73 und 74. Die so im Farbsynchronintervall erhaltenen Korrekturwerte werden dann während der folgenden Zeile in der Phasenkorrekturstufe 79 dem Farbartsignal korrigierend zugefügt. Im Bereich der Farbartsignalübertragung, also außerhalb des Farbsynchronsignals, erhält man auf der Leitung 9 Abtastwerte $c_0$ bis $c_3$ gemäß der nachstehenden Tabelle 2.

## Tabelle 2

$$c_0 = U \cos\alpha + V \sin\alpha$$
$$c_1 = U \sin\alpha - V \cos\alpha$$
$$c_2 = -U \cos\alpha - V \sin\alpha$$
$$c_3 = -U \sin\alpha + V \cos\alpha$$

U und V sind dabei die Farbdifferenzsignale (B-Y) bzw. (R-Y). Das Vorzeichen des roten Farbdifferenzsignals (R-Y), das gemäß der PAL-Norm in aufeinanderfolgenden Zeilen wechselt, wird bei dieser Betrachtung nicht berücksichtigt, sondern erst im nachfolgenden Demodulator 49 korrigiert.

In der Korrekturstufe 79 wird einerseits der jeweilige Abtastwert mit einem Signal nach Formel (8) multipliziert und der mittels der Verzögerungsstufe 80 erhaltene, im Abtastintervall vorangegangene Wert wird in der Stufe 78 mit einem Korrekturwert gemäß Formel (9) multipliziert. Diese beiden korrigierten Werte werden dann in der Stufe 81 addiert, so daß am Ausgang der Stufe 79 für den Eingang des Demodulators 49 ein Signal auftritt, das jeweils aus einem Farbartsignalwert und dem unmittelbar vorher abgetasteten Farbartsignalwert mit den entsprechenden Korrekturen besteht. Man erhält somit ein korrigiertes Signal gemäß den nachstehenden Formeln:

$$c_1 (\sin\alpha + \cos\alpha) + c_0 (\cos\alpha - \sin\alpha) \qquad (10)$$

$$= (U \sin\alpha - V \cos\alpha)(\sin\alpha + \cos\alpha) \qquad (11)$$
$$+ (U \cos\alpha + V \sin\alpha)(\cos\alpha - \sin\alpha) \qquad (12)$$

$$= U (\sin^2\alpha + \sin\alpha \cos\alpha + \cos^2\alpha - \cos\alpha \sin\alpha) \quad (13)$$
$$+ V (-\cos\alpha \sin\alpha - \cos^2\alpha + \cos\alpha \sin\alpha - \sin^2\alpha) \quad (14)$$

$$= U - V \qquad (15).$$

Für die weiteren Abtastwerte, jeweils korrigiert und kombiniert mit dem dann vorangehenden Abtastwert, erhält man in entsprechender Weise (U + V), (-U-V) und (-U + V). Aus diesen Werten lassen sich in einfacher Weise die Farbdifferenzsignale (B-Y) und (R-Y) im Demodulator 49, gegebenenfalls in einer zusätzlichen Stufe, ableiten.

Wie aus den angegebenen Formeln ersichtlich ist, werden die Anteile, die sich als Produkt von sin und cos darstellen, eliminiert dadurch, daß bei jedem einzelnen Abtastpunkt die Werte von dem vorangehenden Abtastpunkt mit dazu addiert werden. Es treten also keine Störanteile, die gegebenenfalls durch zusätzliche Filter abgetrennt werden müßten, auf.

Die Umformung kann auch mittels eines in der Stufe 55 ausschließlich enthaltenen Registers erfolgen, das mit X bzw. Y als eine Adresse angesteuert wird und Werte gemäß Formel 8 bzw. 9 abgibt.

Bei der Ausführungsform nach Fig. 4 wird die Phasenkorrektur im Kanal des Farbartsignals vorgenommen. Dabei können infolge der Modulation unerwünschte Erscheinungen bei den Seitenbändern höherer Frequenz auftreten.

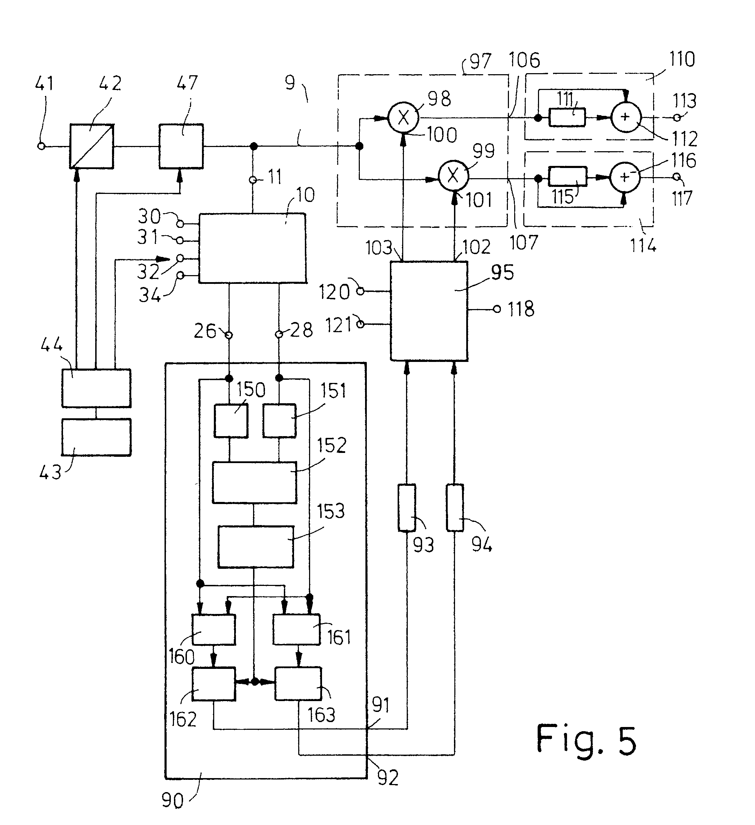

In der Ausführungsform nach Fig. 5 wird daher die Phasenkorrektur im Bezugssignal vorgenommen, welches Bezugssignal unmoduliert ist und somit keine modulationsabhängigen Seitenbänder aufweist.

Dazu wird in Fig. 5, ähnlich Fig. 4, das analoge FBAS-Signal von der Klemme 41 über den Wandler 42 und einen Bandpaß 47 einer Leitung 9 zugeführt, die mit der Klemme 11 verbunden ist. An die Klemme 11 ist ein Farbsynchronsignal-Abtaster 10 angeschlossen, der an den Klemmen 26 und 28 Signale entsprechend den Formeln (6) bzw. (7) liefert. Diese werden in einer dritten Umwandlerstufe 90 gemäß den nachstehenden Formeln umgewandelt:

$$\sqrt{\frac{X + Y}{2(X^2 + Y^2)}} = \cos \alpha \qquad (16)$$

$$\sqrt{\frac{X - Y}{2(X^2 + Y^2)}} = \sin \alpha \qquad (17)$$

Dazu werden, wie in Fig. 3, aus den Signalen X und Y von den Klemmen 26 und 28 in den Stufen 150 bzw. 151 die Quadrate gebildet und in der Stufe 152 summiert; daraus wird dann in der Stufe 153 die Wurzel gezogen. Außerdem werden in den Stufen 160 und 161 die Signale X und Y addiert bzw. subtrahiert. Die erhaltene Summe bzw. Differenz wird in der Stufe 162 bzw. 163 durch die mit der Stufe 153 erhaltene Wurzel der Summe der Quadrate dividiert; an den Ausgängen 91 und 92 der Umwandlungsstufe 90 werden somit gemäß den Formeln 16 bzw. 17 phasenabhängige Steuergrößen erhalten, in je einem Filter 93 bzw. 94 geglättet und dann einer Zuordnungsstufe 95 zugeführt.

Das durch Abtastung erhaltene, digitale Farbartsignal von der Leitung 9, an der die Klemme 11 liegt, wird von einem Demodulator 97 zugeführt. Dieser enthält zwei Multiplizierstufen 98 und 99, deren erste Eingänge mit der Leitung 9 von der Klemme 11 verbunden sind. Der zweite Eingang 100 der Multiplizierstufe 98 und der zweite Eingang 101 der Multiplizierstufe 99 ist mit dem ersten Ausgang 102 bzw. dem zweiten Ausgang 103 der Zuordnungsstufe 95 verbunden. Über die Zuordnungsstufe 95 werden die Phasenkorrektursignale +sin α oder -sind α bzw. +cos α oder -cos α alternativ mit den Eingängen 100 bzw. 101 der Multiplizierstufen 98 und 99 verbunden derart, daß am Ausgang dieser Multiplizierstufen das eine bzw. das andere demodulierte und in der PAL-Phase korrigierte Farbdifferenzsignal auftritt. Dies entspricht den Zuordnungen gemäß den nachstehenden Tabellen:

## Tabelle 3

n =

0: $(U \cos\alpha + V \sin\alpha) \cdot \cos\alpha = U \cos^2\alpha + V \sin\alpha \cos\alpha$

1: $(U \sin\alpha - V \cos\alpha) \cdot \sin\alpha = U \sin^2\alpha - V \sin\alpha \cos\alpha$

2: $(-U \cos\alpha - V \sin\alpha) \cdot (-\cos\alpha) = U \cos^2\alpha + V \sin\alpha \cos\alpha$

3: $(-U \sin\alpha + V \cos\alpha) \cdot (-\sin\alpha) = U \sin^2\alpha - V \sin\alpha \cos\alpha$

## Tabelle 4

n =

0: $(U \cos\alpha + V \sin\alpha) \cdot \sin\alpha = U \sin\alpha \cos\alpha + V \sin^2\alpha$

1: $(U \sin\alpha - V \cos\alpha) \cdot (-\cos\alpha) = -U \sin\alpha \cos\alpha + V \cos^2\alpha$

2: $(-U \cos\alpha - V \sin\alpha) \cdot (-\sin\alpha) = U \sin\alpha \cos\alpha + V \sin^2\alpha$

3: $(-U \sin\alpha + V \cos\alpha) \cdot \cos\alpha = -U \sin\alpha \cos\alpha + V \cos^2\alpha$

Im ersten Klammerausdruck jeder Zeile beider Tabellen stehen die durch Abtastung nacheinander erhaltenen Signalkombinationen mit ihrer Abhängigkeit vom Winkel $\alpha$. Dahinter ist jeweils der Korrekturfaktor angegeben, der durch die Zuordnungsstufe 95 übertragen und durch Multiplikation hinzugefügt wird. Es ergeben sich dann von Punkt zu Punkt die rechts vom Gleichheitszeichen stehenden Werte, und zwar am Ausgang 106 die Werte nach Tabelle 4 und am Ausgang 107 die Werte nach Tabelle 3. An den Ausgang 106 ist ein Glättungsfilter 110 angeschlossen, das aus der Reihenschaltung einer um einen Takt verzögernden Stufe 111 und einer Summierstufe 112 besteht, deren zweiter Eingang mit dem Eingang der Verzögerungsstufe 111 verbunden ist. Am Ausgang 113 tritt somit die Summe jedes korrigierten Wertes entsprechend der rechten Seite der Tabelle 4 mit dem beim vorangehenden Takt erhaltenen Wert auf, so daß sich nur der Wert V - entsprechend dem roten Farbdifferenzsignal $+$ (R-Y) - ergibt.

Entsprechend ist an den Ausgang 107 ein Filter 114 angeschlossen mit einer um einen Takt verzögernden Stufe 115 und einer Additionsstufe 116 in gleicher Schaltung, wobei entsprechend der Steuerung von der Zuordnungsstufe 95 her am Ausgang der Wert U - entsprechend dem blauen Farbdifferenzsignal (B-Y) - auftritt.

Um Fehler, die durch Schwankungen des Amplitudenfaktors A in den Farbdifferenzsignalen (B-Y) bzw. (R-Y) auftreten, zu vermeiden, kann in den Schaltungen nach Fig. 4 bzw. Fig. 5 zusätzlich eine Amplitudenregelung vorgenommen werden. Dazu sind die Umformungsstufen 70 bzw. 90 derart abzuwandeln, daß sie aus den über die Klemmen 26 und 28 zugeführten Größen X und Y zwei Ausgangssignale bilden, die dem Amplitudenfaktor A umgekehrt proportional sind. Z.B. sind in Fig. 4 an den Ausgängen 71 und 72 Signale gemäß den folgenden Formeln abzugeben:

$$\frac{\sqrt{2} \cdot X}{X^2 + Y^2} = \frac{1}{A} \cdot (\sin\alpha + \cos\alpha) \qquad (19)$$

$$\frac{\sqrt{2} \cdot Y}{X^2 + Y^2} = \frac{1}{A} \cdot (-\sin\alpha + \cos\alpha) \qquad (20)$$

Bei der Multiplikation der Signale von den Ausgangsklemmen 71 und 72 mit den über die Leitungen 9 zugeführten abgetasteten Farbarsignal in der Phasenkorrekturstufe 79 werden dann eventuelle Amplitudenfehler kompensiert.

Ein entsprechender Amplitudenausgleich kann auch in der Schaltungsanordnung nach Fig. 5 vorgenommen werden. Dazu ist die dritte Umwandlerstufe 90 derart modifiziert, daß die von der Umwandlerstufe 90 an ihren Ausgängen 91 und 92 abgege benen Ausgangssignale aus den über die Klemmen 26 und 28 zugeführten Signale nach folgenden Formeln gebildet werden:

$$\frac{X + Y}{\sqrt{2} \cdot (X^2 + Y^2)} = \frac{1}{A} \cdot \cos \alpha \qquad (21)$$

$$\frac{X - Y}{\sqrt{2} \cdot (X^2 + Y^2)} = \frac{1}{A} \cdot \sin \alpha \qquad (22).$$

Die angegebenen Werte nach den Formeln 19 bis 22 lassen sich in einfacher Weise dadurch erhalten, daß in Fig. 4 bzw. Fig. 5 die Stufe 153 zum Wurzelziehen weggelassen wird. Dann wird das ursprüngliche Signal nicht durch den Amplitudenfaktorwert, sondern durch dessen Quadrat geteilt, so daß der proportionale Anteil wegfällt und der inverse Anteil übrigbleibt.

**Ansprüche**

1. Schaltungsanordnung in einem Farbfernsehempfänger zum Gewinnen einer phasenabhängigen Steuergröße, die abhängig ist von der Phasenverschiebung eines einen Amplitudenfaktor aufweisenden Farbsynchronsignals gegenüber einem Bezugssignal, vorzugsweise etwa gleicher Frequenz, das phasenstarr gekoppelt ist mit einem Taktsignal, mit dem die Amplitudenwerte des Farbsynchronsignals abgetastet werden und dessen Frequenz das 4n-fache der Frequenz des Bezugssignals beträgt, wobei n eine ganze Zahl der Reihe 1, 2, ... ist und die Tastung derart erfolgt, daß eine erste durch die Abtastung erhaltene Signalprobe (X, z.B. A . (sin α + cos α )) und eine zweite um eine Viertelperiode des Farbsynchronsignals verschobene Signalprobe (Y, z.B. A . (cos α - sin α )) erhalten werden, die der Amplitude (A) des Farbsynchronsignals proportional sind und die von dem Phasenwinkel ( α ) des Farbsynchronsignals gegenüber einem durch das Bezugssignal bestimmten Zeitpunkt gemäß einer Winkelfunktion abhängen, wobei die Signalproben (X und Y) quadriert und aus ihrer Summe die Wurzel gezogen wird derart, daß der Amplitudenfaktor erhalten wird und wobei weiter mittels wenigstens einer Umformungsstufe, deren Eingang die erste und die zweite Signalprobe zugeführt werden, wenigstens eine vom Phasenwinkel ( α ) abhängige, vom Amplitudenfaktor wenigstens nahezu unabhängige phasenabhängige Steuergröße erhalten wird, dadurch gekennzeichnet, daß der Umformerstufe (55, 70, 90) sin- und/oder cos-Glieder enthaltende Signalproben (X, Y) zugeführt werden, aus denen der Amplitudenfaktor (A) gebildet wird, und daß mindestens eine Signalprobe (x, y) durch den gewonnenen Amplitudenfaktor (A) dividiert wird.

2. Schaltungsanordnung nach Anspruch 1, dadurch gekennzeichnet. daß die Umformung wenigstens annähernd der Funktion

$$X / \sqrt{(X^2 + Y^2)}$$

bzw.

$$Y / \sqrt{(X^2 + Y^2)}$$

entspricht, so daß eine Steuergröße erhalten wird, die zu ( ± sin α + cos α ) proportional ist.

3. Schaltungsanordnung nach Anspruch 1 oder 2, dadurch gekennzeichnet , daß die Umformung wenigstens annähernd der Funktion

$$(X \pm Y) / \sqrt{(X^2 + Y^2)}$$

entspricht, so daß eine Steuergröße erhalten wird, die zu cos α bzw. sin α proportional ist.

11

4. Schaltungsanordnung nach Anspruch 1, 2 oder 3, dadurch gekennzeichnet , daß die Umformung wenigstens annähernd der Funktion

$$\frac{(X - Y) \cos\alpha_o - (X + Y) \sin\alpha_o}{(X^2 \cdot Y^2)}$$

$$bzw. \quad \frac{(X - Y) \sin\alpha_o + (X + Y) \cos\alpha_o}{\sqrt{X^2 + Y^2}}$$

entspricht, so daß eine Stellgröße erhalten wird, die zu $\sin(\alpha - \alpha_o)$ bzw. $\cos(\alpha - \alpha_o)$ proportional ist.

5. Schaltungsanordnung nach Anspruch 1 bis 4, dadurch gekennzeichnet, daß die Ausgangswerte einer Umformungsstufe (55) in Form einer Wertetabelle gespeichert sind und mittels x bzw. Y als Adresse abgerufen werden.

6. Schaltungsanordnung nach Anspruch 5, dadurch gekennzeich net, daß die Phasen-Steuergröße dem das Taktsignal bedingen-den Oszillator (43) zur Frequenz- und/oder Phasenregelung zugeführt wird.

7. Schaltungsanordnung nach Anspruch 6, daduch gekennzeich net, daß eine etwa $\sin\alpha$ entsprechende Phasen-Steuergröße dem Oszillator (43) zur Regelung zugeführt wird, so daß eine Regelung auf den Sollwert $\alpha = 0°$ bewirkt wird.

8. Schaltungsanordnung nach Anspruch 7, dadurch gekennzeich net, daß eine zu $(\sin\alpha - \cos\alpha)$ proportionale Phasen-Steuergröße dem Oszillator (43) zugeführt wird, so daß eine Regelung auf den Sollwert $\alpha = 45°$ bewirkt wird.

9. Schaltungsanordnung nach Anspruch 6 oder 7, dadurch ge kennzeichnet, daß die Phasen-Steuergröße über ein proportional und/oder integrierend übertragendes Filterglied (60) dem Oszillator zugeführt wird.

10. Schaltungsanordnung nach einem der Ansprüche 1 bis 5, dadurch gekennzeichnet, daß zum Korrigieren der Phase des Bezugssignals mit einer gegenüber dem Farbsynchronsignal gleichen Frequenz eine Phasen-Steuergröße und das Bezugssignal einer Multiplizierstufe (77) zugeführt werden, deren Ausgangssignal das in der Phase korrigierte und gegebenenfalls phasenrichtig demodulierte Farbartsignal liefert (Fig. 4).

11. Schaltungsanordnung nach Anspruch 10, dadurch gekenn zeichnet, daß das Ausgangssignal additiv oder subtraktiv (in 81) mit dem Ausgangssignal einer weiteren, mit einer anderen Phasen-Steuergröße gegebenenfalls über eine Vorzögerungsstufe (80) angesteuerten Multiplizierstufe (78) kombiniert wird (Fig.4)

12. Schaltungsanordnung nach Anspruch 11, dadurch gekenn zeichnet, daß aus dem ersten und dem zweiten Abtastsignal eine erste, $(\sin\alpha + \cos\alpha)$ entsprechende und eine zweite, $(\cos\alpha - \sin\alpha)$ entsprechende Phasen-Steuergröße gebildet und, vorzugsweise über je ein höherfrequente Signale zurückhaltendes Filter (73, 74), einer ersten bzw. einer zweiten Mischstufe am ersten Eingang (75 bzw. 76) zugeleitet wird, deren anderem Eingang das Farbartsignal direkt bzw. um eine Taktperiode verzögert zugeführt wird und deren Ausgangssignale in einer Additionsstufe (81) kombiniert werden, derart, daß am Ausgang der Additionsstufe (81) das Farbartsignal praktisch ohne Phasenfehler auftritt.

13. Schaltungsanordnung nach Anspruch 11, dadurch gekenn zeichnet, daß aus dem ersten und dem zweiten Abtastsignal eine erste, $\sin\alpha$ entsprechende und eine zweite, $\cos$ entsprechende Phasensteu-

EP 0 110 446 B1

ergröße gebildet und, vorzugsweise über je ein höherfrequente Anteile zurückhaltendes Filter (93 bzw. 94), über eine Zuordnungsstufe abwechselnd und gegebenenfalls mit wechselndem Vorzeichen einer dritten und einer vierten Mulitplizierstufe (98 bzw. 99) zugeführt werden, deren anderen Eingängen das Farbartsignal zugeführt wird, wobei die Zuordnung derart ist, daß an den Ausgängen der Multiplizierstufen (98 bzw. 99) die auf dem Farbartsignal in Orthogonalmodulation enthaltenen Signale demoduliert auftreten (Fig. 5).

14. Schaltungsanordnung nach Anspruch 11, dadurch gekenn zeichnet, daß aus dem ersten und dem zweiten Abtastsignal eine erste sin ( α - α₀)entsprechende und eine zweite, cos (α - α₀) entsprechende Phasensteuergröße gebildet werden, wobei gegebenenfalls das Vorzeichen von $\alpha_0$ von Zeile zu Zeile umgeschaltet werden kann, und daß diese Phasensteuergröße, vorzugsweise über je ein höherfrequente Anteile zurückhaltendes Filter (93 bzw. 94), über eine Zuordnungsstufe (95) abwechselnd und gegebenenfalls mit wechselndem Vorzeichen einer dritten und einer vierten Multiplizierstufe (98 bzw. 99) zugeführt werden, deren anderen Eingängen das Farbartsignal zugeführt wird, wobei die Zuordnung derart ist, daß an den Ausgängen der Multiplizierstufen (98 bzw. 99) die auf dem Farbartsignal in Orthogonalmodulation enthaltenen Signale demoduliert auftreten (Fig. 5).

15. Schaltungsanordnung nach Anspruch 12 oder 13, dadurch gekennzeichnet, daß die Ausgangssignale der Multiplizierstufen (98 bzw. 99) über je ein höherfrequente Anteile unterdrückendes Filter (110, 114) geführt werden.

16. Schaltungsanordnung nach Anspruch 15, dadurch gekenn zeichnet, daß das Ausgangssignal einer Multiplizierstufe (98 bzw. 99) einer Additionsstufe (112 bzw. 116) einerseits direkt und andererseits über eine um ein, einer Viertelperiode des Farbartsignals entsprechendes Intervall verzögernde Stufe (111 bzw. 115) zugeführt wird, so daß am Ausgang der Additionsstufe das gefilterte demodulierte Signal auftritt.

17. Schaltungsanordnung nach einem der Ansprüche 1 bis 4, dadurch gekennzeichnet , daß das Farbsynchronsignal, dessen Abtastwerte der Umformungsstufe (55) zugeführt werden, mittels des erhaltenen Amplitudenfaktor-Wertes in der Amplitude auf einen vorgebbaren Wert geregelt wird.

18. Schaltungsanordnung nach Anspruch 17, dadurch ge kennzeichnet, daß der erhaltene Amplitudenfaktor-Wert auch einem die Amplitude des Farbsynchronsignals einstellenden Amplitudenstellglied (137) zugeführt wird (Fig.3)

19. Schaltungsanordnung nach Anspruch 18, dadurch gekenn zeichnet, daß der Amplitudenfaktor-Wert über ein proportional und/oder integrierend übertragendes Filterglied (135) dem Amplitudenstellglied (137) zugeführt wird (Fig. 3).

20. Schaltungsanordnung nach Anspruch 18 oder 19, dadurch gekennzeichnet, daß der Amplitudenfaktor-Wert über eine Additionsstufe (132) dem Amplitudenstellglied (137) zugeführt wird, in welcher Additionsstufe (132) die AmplitudenSteuergröße mit einem vorgebbaren Sollwert verglichen wird (Fig. 3).

21. Schaltungsanordnung nach Anspruch 9, dadurch gekenn zeichnet, daß die Phasen-Steuergröße zusätzlich abhängig von der Amplitude des Farbsynchronsignals ist derart, daß das Ausgangssignal der Multiplizierstufe (77) unabhängig von Schwankungen der Amplitude des Farbsynchronsignals wird (Fig. 4)

22. Schaltungsanordnung nach Anspruch 21, dadurch gekenn zeichnet, daß die Phasen-Steuergröße umgekehrt proportional zur Amplitude des Farbsynchronsignals ist.

## Claims

1. A circuit arrangement in a colour television receiver to obtain a phase-dependent control value which depends on the phase shift of a colour burst signal having an amplitude factor, with respect to a reference signal, preferably of approximately the same frequency, which is phase-locked to a clock signal with which the amplitude values of the colour burst signal are sampled and whose frequency is

13

the 4 n -fold of the frequency of the reference signal,

in which n is an integer of the series 1, 2, ... and the keying occurs in such a manner that a first signal sample ($\bar{X}$, for example A . (sin $\alpha$ + cos $\alpha$)) obtained by the sampling and a second signal sample (Y, for example A . (cos $\alpha$ - sin $\alpha$)) shifted by a quarter of a cycle of the colour burst signal are obtained,

which are proportional to the amplitude (A) of the colour burst signal and which depend on the phase angle ($\alpha$) of the colour burst signal with respect to a point of time determined by the reference signal according to an angular function,

in which the signal samples (X and Y) are squared and the root is extracted from their sum in such a manner that the amplitude factor is obtained, and in which furthermore, by means of at least one conversion stage to the input of which the first and the second signal samples are applied, at least a phase-dependent control value which depends on the phase angle ($\alpha$) and is at least substantially independent of the amplitude factor is obtained,

characterized in that the conversion stage (55, 70, 90) is supplied with signal samples (X, Y) which contain sin and/or cos-members, from which the amplitude factor (A) is formed and that at least one signal sample (X, Y) is divided by the recovered amplitude factor (A).

2. A circuit arrangement as claimed in Claim 1, characterized in that the conversion corresponds at least approximately to the formula $X/\sqrt{(X^2 + Y^2)}$ and $Y/\sqrt{(X^2 + Y^2)}$, respectively, so that a control value is obtained which is proportional to ($\pm$ sin $\alpha$ + cos $\alpha$).

3. A circuit arrangement as claimed in Claim 1 or 2, characterized in that the conversion corresponds at least approximately to the formula $(X + Y)/\sqrt{(x^2 + Y^2)}$ so that a control value is obtained which is proportional to cos $\alpha$ and sin $\alpha$, respectively.

4. A circuit arrangement as claimed in Claim 1, 2 or 3, characterized in that the conversion corresponds at least approximately to the formulae

$$\frac{(X-Y)\ \cos\ \alpha_0\ -\ (X+Y)\ \sin\ \alpha_0}{\sqrt{(X^2\ +\ Y^2)}}$$

and

$$\frac{(X-Y)\ \sin\ \alpha_0\ -\ (X+Y)\ \cos\ \alpha_0}{\sqrt{(X^2\ +\ Y^2)}}$$

respectively, so that a control value is obtained which is proportional to sin ($\alpha$ - $\alpha_0$) and cos ($\alpha$ - $\alpha_0$), respectively.

5. A circuit arrangement as claimed in Claims 1 to 4, characterized in that the output values of a conversion stage (55) are stored in the form of a value Table and are read by means of X and Y, respectively, as addresses.

6. A circuit arrangement as claimed in Claim 5, characterized in that the phase control value is applied to the oscillator (43) determining the clock signal, for frequency and/or phase control.

7. A circuit arrangement as claimed in Claim 6, characterized in that a phase control quantity corresponding approximately to sin a is applied to the oscillator (43) so that a control to the nominal value of $\alpha$ = $0°$ is effected.

8. A circuit arrangement as claimed in Claim 7, characterized in that a phase control value which is proportional to (sin $\alpha$ - cos $\alpha$) is applied to the oscillator (43) so that a control to the nominal value a = $45°$ is effected.

9. A circuit arrangement as claimed in Claim 6 or 7, characterized in that the phase control value is applied to the oscillator via a filter which transmits proportionally and/or integratingly.

10. A circuit arrangement as claimed in any of the Claims 1 to 5, characterized in that for correcting the phase of the reference signal with a frequency which is the same with respect to the colour burst signal a phase control value and the reference signal are supplied to a multiplier stage (77) whose output signal provides the phase-corrected and optionally phase-correct demodulated chrominance signal (Fig. 4).

11. A circuit arrangement as claimed in Claim 10, characterized in that the output signal is combined additively or subtractively (in 81) with the output signal of a further multiplier stage (78) driven with another phase control quantity optionally via a delay stage (80) (Fig. 4).

12. A circuit arrangement as claimed in Claim 11, characterized in that from the first and second sample signals a first phase control quantity corresponding to (sin $\alpha$ + cos $\alpha$) and a second phase control quantity corresponding to (cos $\alpha$ - sin $\alpha$) are formed and are applied, preferably via each a filter retaining higher frequency signals (73, 74), to a first and a second mixer stage, respectively, at the first input (75 and 76, respectively), to the other input of which the chrominance signal is applied directly and delayed by one clock period, respectively, and whose output signals are combined in an adder stage (81) in such a manner that the chrominance signal appears substantially without phase error at the output of the adder stage (81).

13. A circuit arrangement as claimed in Claim 11, characterized in that a first phase control value corresponding to sin a and a second phase control quantity corresponding to cos $\alpha$ are formed from the first and the second sample signal and, preferably via each time a filter (93 and 94, respectively), retaining higher frequency parts, are applied via an allocation stage alternately and optionally with varying signs to a third and fourth multiplier stage (98 and 99, respectively) to the other inputs of which the chrominance signal is applied, the allocation being such that the signals comprised in the chrominance signal in orthogonal modulation appear demodulatedly at the outputs of the multipliers stages (98 and 99, respectively (Fig. 5).

14. A circuit arrangement as claimed in Claim 11, characterized in that a first phase control value corresponding to sin ($\alpha$ - $\alpha_0$) and a second phase control quantity corresponding to cos ($\alpha$ - $\alpha_0$) are formed from the first and the second sample signal, in which optionally the sign of $\alpha_0$ can be switched from line to line and that the said phase control value, preferably via a filter (93 and 94, respectively), retaining higher frequency parts, are applied via an allocation stage alternately and optionally with varying signs to a third and fourth multiplier stage (98 and 99, respectively) to the other inputs of which the chrominance signal is applied, the allocation being such that at the output of the multiplier stages (98 and 99, respectively) the signals comprised in the chrominance signal in orthogonal modulation appear demodulatedly (Fig. 5).

15. A circuit arrangement as claimed in Claim 12 or 13, characterized in that the output signals of the multiplier stages (98 and 99, respectively) are supplied each via a filter (110, 114) suppressing higher frequency components.

16. A circuit arrangement as claimed in claim 15, characterized in that the output signal of a multiplier stage (98 and 99, respectively) is supplied to an adder stage (112 and 116, respectively) on the one hand directly and on the other hand via a delay stage (111 and 115, respectively) which produces a delay of an interval corresponding to a quarter of a cycle of the chrominance signal so that at the output of the adder stage the filtered demodulated signal occurs.

17. A circuit arrangement as claimed in any of the Claims 1 to 4, characterized in that the colour burst signal whose sample values are supplied to the conversion stage (55) has its amplitude controlled by means of the obtained amplitude factor and a previously determined value.

18. A circuit arrangement as claimed in Claim 17, characterized in that the obtained amplitude factor value is also applied to an amplitude adjusting member (137) adjusting the amplitude of the colour burst signal (Fig. 3).

19. A circuit arrangement as claimed in Claim 18, characterized in that the amplitude factor value is applied to the amplitude adjusting member (137) via a filter member (135) which transmits proportionally and/or integratingly (Fig. 3).

**20.** A circuit arrangement as claimed in Claim 18 or 19, characterized in that the amplitude factor value is applied via an adder stage (132) to the amplitude adjusting member (137), in which adder stage (132) the amplitude control value is compared with a previously determined nominal value (Fig. 3).

**21.** A circuit arrangement as claimed in Claim 9, characterized in that the phase control value additionally depends on the amplitude of the colour burst signal in such a manner that the output signal of the multiplier stage (77) becomes independent of fluctuations of the amplitude of the colour burst signal (Fig. 4).

**22.** A circuit arrangement as claimed in Claim 21, characterized in that the phase control value is inversely proportional to the amplitude of the colour burst signal.

## Revendications

**1.** Montage de circuit dans un récepteur de télévision en couleurs destiné à l'obtention d'une grandeur de commande dépendant de la phase qui est fonction du déphasage d'un signal de synchronisation couleur à facteur d'amplitude par rapport à un signal de référence présentant, de préférence, à peu près la même fréquence, qui est couplé, rigide en phase, à un signal d'horloge à l'aide duquel les valeurs d'amplitude du signal de synchronisation couleur sont échantillonnées et dont la fréquence vaut 4n fois la fréquence du signal de référence, où n est un nombre entier compris dans la série 1, 2, ... et l'échantillonnage est réalisé d'une manière telle que l'on obtienne un premier échantillon de signal [X, par exemple A. $(\sin\alpha + \cos\alpha)$] produit par échantillonnage et un deuxième échantillon de signal [Y, par exemple A.$(\cos\alpha-\sin\alpha)$] qui est décalé d'un quart de période du signal de synchronisation couleur,

ces deux échantillons étant proportionnels a l'amplitude (A) du signal de synchronisation couleur et dépendant, suivant une fonction angulaire, de l'angle de phase ($\alpha$) que le signal de synchronisation couleur forme avec un instant déterminé par le signal de référence,

dans lequel les échantillons de signal (X et Y) sont élevés au carré et la racine carrée est extraite de leur somme d'une manière propre à fournir le facteur d'amplitude,

et dans lequel, en outre, à l'aide d'au moins un étage de conversion, à l'entrée duquel le premier et le deuxième échantillon de signal sont appliqués, est obtenue au moins une grandeur de commande dépendant de la phase qui est fonction de l'angle de phase ($\alpha$) et est au moins à peu près indépendante du facteur d'amplitude, caractérisé en ce que l'étage de conversion (55, 70, 90) reçoit des échantillons de signal (X, Y) contenant les termes sinus et/ou cosinus à partir desquels est formé le facteur d'amplitude (A) et qu'au moins un des échantillons de signal (X, Y) est divisé par le facteur d'amplitude (A) obtenu.

**2.** Montage de circuit suivant la revendication 1, caractérisé en ce que la conversion peut être réalisée de manière telle qu'elle corresponde au moins approximativement à la fonction

$$X/\sqrt{(X^2 + Y^2)}$$

ou

$$Y/\sqrt{(X^2 + Y^2)},$$

pour donner une grandeur de commande qui est proportionnelle à [$\pm$ $\sin\alpha$ + $\cos\alpha$].

**3.** Montage de circuit suivant la revendication 1 ou 2, caractérisé en ce que la conversion est réalisée d'une manière telle qu'elle corresponde au moins approximativement à la fonction

$$(X \pm Y)/\sqrt{(X^2 + Y^2)}$$

16

pour donner une grandeur de commande qui est proportionnelle à $\cos\alpha$ ou à $\sin\alpha$.

4. Montage de circuit suivant la revendication 1, 2 ou 3, caractérisé en ce que la conversion peut être réalisée d'une manière telle qu'elle corresponde au moins approximativement à la fonction :

$$\frac{(X - Y)\ \cos\alpha_o - (X + Y)\ \sin\alpha_o}{(X^2 \cdot Y^2)}$$

ou

$$\frac{(X - Y)\ \sin\alpha_o + (X + Y)\ \cos\alpha_o}{\sqrt{(X^2 + Y^2)}}$$

pour fournir une grandeur de réglage qui est proportionnelle à $\sin(\alpha - \alpha_o)$ ou $\cos(\alpha - \alpha_o)$.

5. Montage de circuit suivant les revendications 1 à 4, caractérisé en ce que les valeurs de sortie d'un étage de conversion (55) sont stockées sous forme d'un tableau de valeurs et sont appelées a l'aide de X ou de Y à titre d'adresse.

6. Montage de circuit suivant la revendication 5, caractérisé en ce que la grandeur de commande de phase est appliquée à l'oscillateur (43) imposant le signal d'horloge en vue de la régulation de fréquence et/ou de phase.

7. Montage de circuit suivant la revendication 6, caractérisé en ce qu'une grandeur de commande de phase correspondant approximativement à $\sin\alpha$ est appliquée à l'oscillateur (43) en vue de la régulation, de sorte qu'une régulation sur la valeur de consigne $\alpha = 0°$ est réalisée.

8. Montage de circuit suivant la revendication 7, caractérisé en ce qu'une grandeur de commande de phase proportionnelle à $(\sin\alpha - \cos\alpha)$ est appliquée à l'oscillateur (43), de sorte qu'une régulation sur la valeur de consigne $\alpha = 45°$ est réalisée.

9. Montage de circuit suivant la revendication 6 ou 7, caractérisé en ce que la grandeur de commande de phase est appliquée à l'oscillateur par l'intermédiaire d'un élément de filtrage (60) à transmission proportionnelle et/ou à intégration.

10. Montage de circuit suivant l'une quelconque des revendications I à 5, caractérisé en ce qu'en vue de corriger la phase du signal de référence présentant la même fréquence que le signal de synchronisation couleur, une grandeur de commande de phase et le signal de référence sont appliqués à un étage multiplicateur (77), dont le signal de sortie fournit le signal de chrominance corrigé en phase et éventuellement démodulé en phase correcte (Fig. 4).

11. Montage de circuit suivant la revendication 10, caractérisé en ce que le signal de sortie est combiné d'une manière additive ou soustractive (en 81) avec le signal de sortie d'un étage multiplicateur (78) suivant qui est activé par une autre grandeur de commande de phase, éventuellement par l'intermédiaire d'un étage à retard (80) (Fig. 4).

12. Montage de circuit suivant la revendication 11, caractérisé en oe qu'à partir du premier et du deuxième signal d'échantillonnage sont formées une première grandeur de commande de phase correspondant à $(\sin\alpha + \cos\alpha)$ et une seconde grandeur de commande de phase correspondant à $(\cos\alpha - \sin\alpha)$ et sont appliquées, de préférence chacune par l'intermédiaire d'un filtre arrêtant les signaux de fréquence supérieure (73, 74), à la première entrée (75 ou 76) d'un premier ou d'un deuxième étage mélangeur, dont l'autre entrée reçoit le signal de chrominance directement ou avec un retard d'une période d'horloge et dont les signaux de sortie sont combinés dans un étage additionneur (81), d'une manière telle qu'à la sortie de l'étage additionneur (81) le signal de chrominance apparaît pratiquement sans déphasage.

13. Montage de circuit suivant la revendication 11, caractérisé en ce qu'à partir du premier et du second signal d'échantillonnage sont formées une première grandeur de commande de phase correspondant à $\sin\alpha$ et une seconde grandeur de commande de phase correspondant à $\cos\alpha$ qui sont appliquées, de préférence chacune par l'intermédiaire d'un filtre arrêtant les fractions à fréquence supérieure (93 ou 94), par un étage d'attribution, en alternance et, éventuellement avec un changement de signe, à un troisième et un quatrième étage multiplicateur (98 ou 99), dont les autres entrées reçoivent le signal de chrominance, l'attribution étant telle qu'aux sorties des étages multiplicateurs (98 ou 99) apparaissent, à l'état démodulé, les signaux contenus dans le signal de chrominance en modulation orthogonale.

14. Montage de circuit suivant la revendication 11, caractérisé en ce qu'à partir du premier et du second signal d'échantillonnage sont formées une première grandeur de commande de phase correspondant à $\sin(\alpha - \alpha_0)$ et une seconde grandeur de commande de phase correspondant à $\cos(\alpha - \alpha_0)$, le signe de $\alpha_0$ pouvant éventuellement être inversé d'une ligne à l'autre et que ces grandeurs de commande de phase sont appliquées, de préférence chacune par l'intermédiaire d'un filtre arrêtant les fractions de fréquence supérieure (93 ou 94), par un étage d'attribution (95) en alternance et éventuellement avec un changement de signe, à un troisième et un quatrième étage multiplicateur (98 ou 99), dont les autres entrées reçoivent le signal de chrominance, l'attribution étant telle qu'aux sorties des étages multiplicateurs (98 et 99) apparaissent, à l'état démodulé, les signaux contenus dans le signal de chrominance en modulation orthogonale (Fig. 5).

15. Montage de circuit suivant la revendication 12 ou 13, caractérisé en ce que les signaux de sortie des étages multiplicateurs (98 ou 99) sont appliqués chaque fois par l'intermédiaire d'un filtre arrêtant les fractions de fréquence supérieure (110, 114).

16. Montage de circuit suivant la revendication 15, caractérisé en ce que le signal de sortie d'un étage multiplicateur (98 ou 99) est appliqué à un étage additionneur (112 ou 116), d'une part, directement, et, d'autre part, par l'intermédiaire d'un étage (111 ou 115) apportant un retard d'un intervalle correspondant à un quart de période du signal de chrominance, de sorte qu'à la sortie de l'étage additionneur apparaît le signal démodulé filtré.

17. Montage de circuit suivant l'une quelconque des revendications 1 à 4, caractérisé en ce que le signal de synchronisation couleur, dont les valeurs d'échantillonnage sont appliquées à l'étage de conversion (55), est réglé en amplitude, sur une valeur pouvant être prédéfinie, à l'aide de la valeur de facteur d'amplitude obtenue.

18. Montage de circuit suivant la revendication 17, caractérisé en ce que la valeur de facteur d'amplitude obtenue est appliquée également à un élément de réglage d'amplitude (137) qui règle l'amplitude du signal de synchronisation couleur (Fig. 3).

19. Montage de circuit suivant la revendication 18, caractérisé en ce que la valeur de facteur d'amplitude est appliquée à l'élément de réglage d'amplitude (137) par l'intermédiaire d'un élément de filtrage (135) à transmission proportionnelle et/ou à intégration (Fig. 3).

20. Montage de circuit suivant la revendication 18 ou 19, caractérisé en ce que la valeur de facteur d'amplitude est appliquée à l'élément de réglage d'amplitude (137), par l'intermédiaire d'un étage additionneur (132), dans lequel la grandeur de commande d'amplitude est comparée à une valeur de consigne pouvant être prédéfinie (Fig. 3).

21. Montage de circuit suivant la revendication 9, caractérisé en ce que la grandeur de commande de phase dépend, en outre, de l'amplitude du signal de synchronisation couleur, d'une manière telle que le signal de sortie de l'étage multiplicateur (77) devient indépendant des fluctuations de l'amplitude du signal de synchronisation couleur (Fig. 4).

22. Montage de circuit suivant la revendication 21, caractérisé en ce que la grandeur de commande de phase est inversement proportionnelle à l'amplitude du signal de synchronisation couleur.

Fig.1

Fig.2

Fig.3

Fig.4

Fig. 5